# EUROPÄISCHE PATENTSCHRIFT

(11) **EP 1 044 866 B1**
(45) Veröffentlichungstag und Bekanntmachung des Hinweises auf die Patenterteilung: **24.08.2005**
(21) Anmeldenummer: 00107780.9
(22) Anmeldetag: 11.04.2000
(51) Int. Cl.: B62D 29/04, B62D 27/04

(54) **Zusammengesetztes Bauteil**
Composite structural member
Elément de construction composé

(30) Priorität: 13.04.1999 DE 19916619
(43) Veröffentlichungstag der Anmeldung: 18.10.2000
(73) Patentinhaber: DURA Automotive Plettenberg Entwicklungs- und Vertriebs GmbH, 58815 Plettenberg (DE); HTP Fohnsdorf GmbH, 8753 Fohnsdorf (AT)
(72) Erfinder: Gerndorf, Ralf, 57413 Finnentrop (DE); Steiner, Gottfried, Dipl.-Ing., 8724 Spielberg (AT)
(74) Vertreter: Laufhütte, Dieter

(56) Entgegenhaltungen:
- FR-A- 2 726 866
- FR-A- 2 771 992
- US-A- 3 013 643

## Beschreibung

Die Erfindung betrifft ein zusammengesetztes Bauteil aus zumindest zwei schalenartig oder flächig gestalteten Einzelteilen, die über diskrete Verbindungsstellen zusammengefügt sind, wobei diese Teile aus Materialien mit unterschiedlichem thermischem Ausdehnungsverhalten bestehen.

Derartige Bauteile werden in entsprechender Ausgestaltung vor allem für verschiedene Fahrzeugteile aber auch als Konstruktionselemente anderer technischer Artikel verwendet. Üblicherweise bestehen sie aus einer Kombination von Metall und Kunststoff. Die Verwendung von Metall und Kunststoff in einem Bauteil, die als Hybridtechnik bezeichnet wird, bietet den Vorteil, dass gezielt die Vorteile der unterschiedlichen Werkstoffe genutzt und miteinander in Kombination gebracht werden können. Dabei werden vor allem großflächige, vorgeformte metallische Teile zum Einlegen in ein Spritzgießwerkzeug mit zusammenhängenden Kunststoffbereichen umspritzt, wobei als Vorteile dieser Technologie insbesondere die Einsparung von Fertigungs- und nachfolgenden Montageschritten gesehen werden. Die an den Metallteil angespritzten Kunststoffstrukturen, die oft mit Verstärkungsrippen versehen werden, erhöhen die Stabilität und die Tragfähigkeit des Metallteils unter unterschiedlichen Beanspruchungen, da sie die einwirkenden Kräfte gut in das Bauteil einleiten und verteilen können.

Es ist bekannt, die Verbindung zwischen den Einzelteilen eines derartigen Verbundkörpers über formschlüssige Verbindungsstellen zwischen den einzelnen Teilen herzustellen. Dazu wird beispielsweise in der EP 0 370 342 B1 vorgeschlagen, einen schalenförmigen Grundkörper, der aus tiefgezogenem Stahlblech oder aus verformtem Kunststoffblech mit eingelegter Glasfasermatrix bestehen kann, mit Verstärkungsrippen aus angespritztem Kunststoff zu versehen, wobei die Verbindung mit dem Grundkörper an diskreten Verbindungsstellen über Durchbrüche im Grundkörper erfolgt, durch welchen der angespritzte Kunststoff hindurch- und über die Flächen der Durchbrüche hinausreicht. Ein derartiger Verbundkörper kann etwa einen Längsholm eines Kraftfahrzeuges bilden.

Aus der EP 0 414 878 B1 ist eine Fahrzeugtür bekannt, die eine aus einem metallischen Teil gebildete Platte aufweist, auf welche ein Kunststoffteil mit Versteifungsrippen aufgeformt ist. Dieses Verbundmaterial bildet ein Element der inneren Struktur der Fahrzeugtür. In der EP 0 672 576 B1 ist eine in eine Fahrzeugkarosserie einmontierbare Baueinheit für den Stirnwand- und Cockpitbereich eines Personenkraftwagens beschrieben, wo die Baueinheit in ihrer tragenden Substanz aus zwei Verbundteilen gebildet ist, die jeweils aus tiefgezogenem Blech und daran angespritztem Kunststoff bestehen. Die Blechteile werden der auftretenden Belastung entsprechend geformt und mit Bohrungen, Durchbrüchen und dergleichen als Verankerungsstellen für den angespritzten Kunststoff zum formschlüssigen Verankern desselben am Blechteil versehen. Der angespritzte Kunststoff wird derart geformt, dass mit ihm eine die Blechteile versteifende Verrippung und entsprechende Aufnahmen für diverse Anbauteile gebildet werden.

Neben den oben bereits erwähnten Vorteilen besitzen in Hybridtechnik hergestellte Verbundkörper aus Metall und Kunststoff aber auch Nachteile. Einer dieser Nachteile basiert auf dem unterschiedlichen Wärmeausdehnungsverhalten der eingesetzten Materialien. Dies kann zu überhöhten Materialbeanspruchungen durch wechselnde Temperaturen, denen selbstverständlich auch Bauteile in Kraftfahrzeugen unterworfen sind, führen, die die Lebensdauer solcher Verbundkörper beeinträchtigen. Bei der Herstellung von Verbundkörpern mit angespritzten Teilen ist zudem zu beachten, daß an jenes Bauteil, an das angespritzt wird, dies wird im Normalfall ein Blechteil sein, besonders hohe Anforderungen bezüglich der Maßgenauigkeit gestellt werden.

Die FR 27 26 866 A offenbart ein zusammengesetztes Bauteil mit zumindest zwei schalenartig oder flächig gestalteten Einzelteilen, die über diskrete Verbindungsstellen miteinander verbindbar sind, wobei die beiden Einzelteile aus Materialien mit unterschiedlichem thermischem Ausdehnungsverhalten bestehen. Im Bereich der Verbindungsstellen zwischen den Einzelteilen ist ein Teil in Kombination mit Rändern wirksam, um die relative Bewegung der Einzelteile zu erlauben und dadurch verschiedene Ausdehnungen der Einzelteile auszugleichen.

Aufgabe der Erfindung ist es, bei einem zusammengesetzten Bauteil der eingangs genannten Art sicherzustellen, daß Wärmedehnungen und Bauteiltoleranzen ausgeglichen werden können.

Erfindungsgemäß wird diese Aufgabe durch die Merkmale des Anspruchs 1 gelöst. Das zusammengesetzte Bauteil umfaßt ein schalenartiges Oberteil und ein Verstärkungsteil, die über diskrete Verbindungsstellen miteinander verbindbar sind, wobei diese beiden Teile aus Materialien mit unterschiedlichem thermischen Ausdehnungsverhalten bestehen. Im Bereich der Verbindungsstellen zwischen den beiden Teilen sind Profilelemente aus elastischem Material wirksam. Daher ist sichergestellt, daß über die Verbindungsstellen der beiden Teile Unterschiede in deren Wärmeausdehnung kompensiert werden können und daß damit auch gleichzeitig Fertigungstoleranzen ausgeglichen werden können.

Die diskreten Verbindungsstellen werden von diskreten Verbindungselementen, die an dem Oberteil ausgebildet sind, und von auf diese aufsetzbaren Durchbrechungen oder dergleichen, die am Verstärkungsteil vorgesehen sind, gebildet. Dies gestattet ein einfaches Zusammenfügen der Einzelteile

Das zusammengesetzte Bauteil umfaßt ferner ein Unterteil, das ein gesondertes Bauteil ist, welches mit dem Oberteil und dem Verstärkungsteil über die diskreten Verbindungselemente des Oberteils verbunden ist, wobei das Verstärkungsteil zwischen dem Oberteil und dem Unterteil angeordnet ist.

Vorzugsweise ist das Unterteil ein in einem Spritzgußverfahren hergestelltes Kunststoffteil.

Nach einer weiteren erfindungsgemäßen Ausführung sind auch die Kanten bzw. Randbereiche des Verstärkungsteils, die mit dem Oberteil in Kontakt sind, mit weiteren elastischen Profilelementen versehen, insbesondere von diesen umschlossen.

Auf besonders einfache Weise lassen sich die elastischen Profilelemente durch Anspritzen an dem Verstärkungsteil anbringen.

Vom Material her wird insbesondere das mit den diskreten Verbindungselementen versehene Oberteil ein im Spritzgussverfahren hergestelltes Kunststoffteil sein, welches dadurch auch besonders einfach mit Verstärkungsrippen und dergleichen versehen werden kann.

Aus Festigkeits- und Stabilitiätsgründen wird das die Durchbrechungen aufweisende Verstärkungsteil als aus Stahlblech bestehendes Verstärkungsteil ausgeführt, welches darüber hinaus mit den elastischen Profilelementen versehen wird.

Bei einem gemäß der gegenständlichen Erfindung gestalteten zusammengesetzten Bauteil kann nun das Oberteil und/oder das Unterteil schalenartig ausgeführt und mit einer glatten und auch ebenen Außenfläche versehen werden.

Je nachdem welchen Belastungen das gemäß der Erfindung gestaltete zusammengesetzte Bauteil ausgesetzt wird, kann es zusätzlich von Vorteil sein, wenn das Verstärkungsteil einen umgebogenen Rand aufweist, welcher mit einem Rand oder dergleichen des Oberteils oder des Unterteils von außen überlappt und über gesonderte Verrastungsstellen an den überlappenden Rändern gegen ein Wegbiegen gesichert wird. Eine rückfedernde Wirkung im Bereich der Verrastungsstellen bei Lasteinbringung, sei es durch entsprechende äußere Belastungen oder bei thermischen Belastungen, ist dann sichergestellt, wenn an den Verrastungsstellen ebenfalls elastische Profilelemente eingefügt sind.

Erfindungsgemäß ausgeführte zusammengesetzte Bauteile können auf besonders vorteilhafte Weise als Bauteile oder Bauteilkomponenten eines Kraftfahrzeuges Verwendung finden.

Weitere Merkmale, Vorteile und Einzelheiten der Erfindung werden nun anhand der Zeichnung, die mehrere Ausführungsbeispiele darstellt, näher beschrieben. Dabei zeigen
- Fig. 1a: eine perspektivische Ansicht eines Teiles einer sich aus drei Einzelteilen zusammensetzenden Ausführungsform eines erfindungsgemäßen Bauteils,
- Fig. 1b: eine Ansicht auf die zweite Seite des Bauteils aus Fig. 1a,

- Fig. 3a: einen Längsschnitt durch das Bauteil entlang der strichliert eingezeichneten Linie 3a - 3a in Fig. 1a,
- Fig. 3b: einen Querschnitt durch das in Fig. 1a dargestellte Bauteil entlang der Linie 3b - 3b,

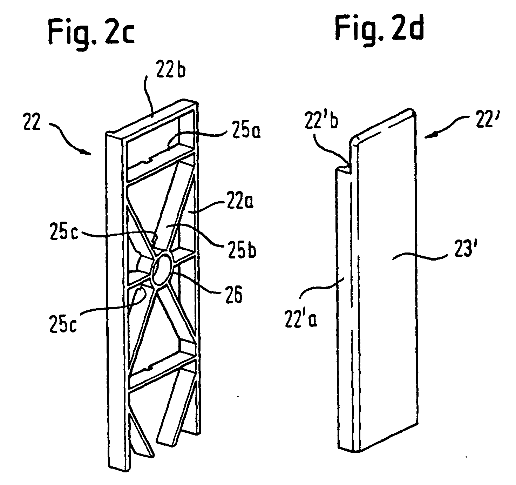

- Fig. 2c und 2d: eine weitere Ausführungsform eines der Einzelteile,

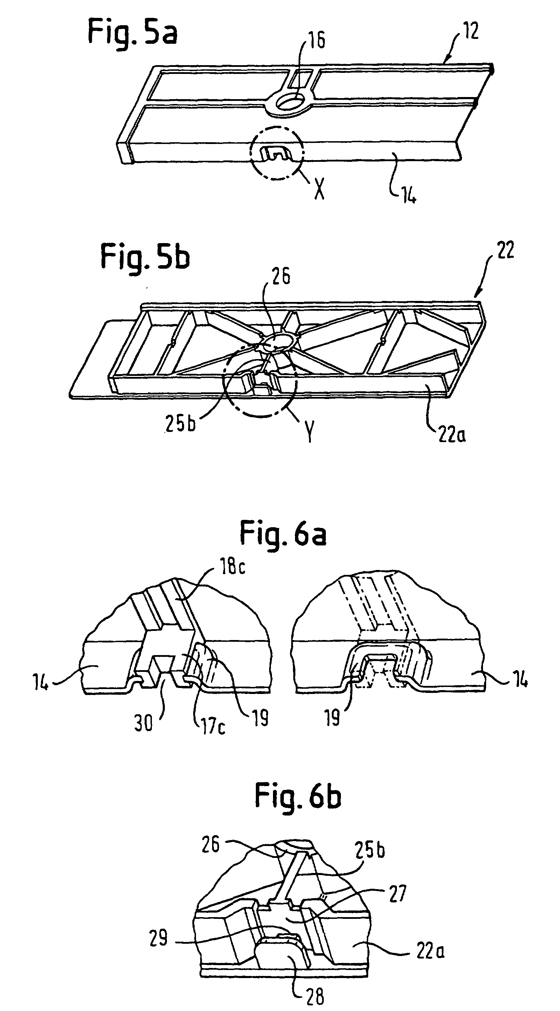

- Fig. 4: einen Querschnitt durch ein Bauteil mit diesem Einzelteil,
- Fig. 5a und 5b: zwei Einzelteile eines Bauteils mit einer weiteren Ausführungsvariante, jeweils in perspektivischer Ansicht,
- Fig. 6a: das Detail X aus Fig. 5a, jedoch von der Innenseite dieses Einzelteils her gesehen in zwei Darstellungsvarianten und
- Fig. 6b: das Detail Y aus Fig. 5b.

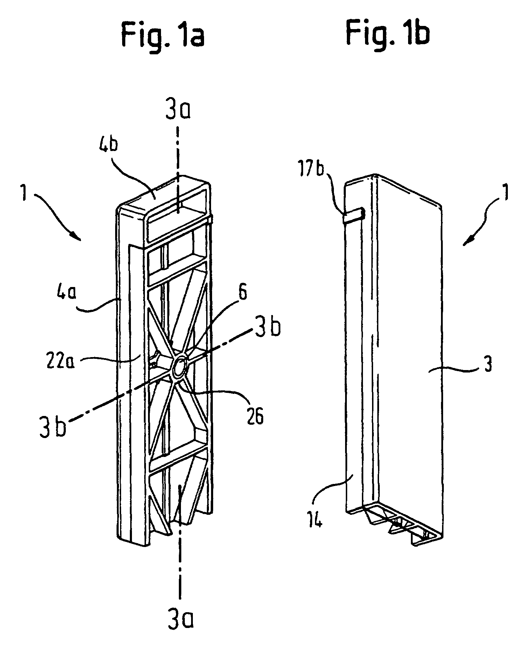

Die in Fig. 1a und 1b dargestellte, aus drei zusammengesetzten Einzelteilen bestehende Ausführungsform eines Bauteils 1 ist eine offene Konstruktion, die beispielsweise in einem Längsholm oder Türholm eines Personenkraftwagens Verwendung finden kann. Dabei ist einer der Endbereiche des hier ansonsten eine lang gestreckte Konstruktion bildenden Bauteils 1 dargestellt. Das Basisteil bzw. Oberteil 2 des Verbundkörpers 1 wird von einem Kunststoffteil gebildet. Das Verstärkungsteil 12 besteht aus einem gebogenen Stahlblech, das in Fig. 2c dargestellte Unterteil 22 ist wieder ein Kunststoffteil. Erwähnt sei, dass die Bezeichnungen Oberteil 2 und Unterteil 22 nichts über die tatsächliche Lagen dieser Bauteile im zusammengesetzten Bauteil 1 aussagen, die Bezeichnungen dienen lediglich zur Unterscheidung der Einzelteile.

Das Oberteil 2 ist ein nach einem Spritzgussverfahren für Kunststoffe hergestelltes Bauteil, auf dessen Ausgestaltung nun näher eingegangen wird. Das Oberteil 2 umfasst eine Basisplatte 3, deren äußere Oberfläche hier glatt und eben ausgeführt ist. Die Basisplatte 3 ist an ihren Längsseiten von Rahmenteiten 4a begrenzt und besitzt an ihrem dargestellten Ende ein Endteil 4b, das hier quaderförmig gestaltet ist und die Rahmenteile 4a überragt.

Innenseitig sind am Oberteil 2 Verstärkungsrippen 5a, 5b ausgebildet. Die Verstärkungsrippen 5a, die rechtwinkelig zu und zwischen den Rahmellteilen 4a verlaufen, unterteilen die Innenseiten in gleich große Abschnitte, von denen in den Zeichnungsfiguren nur einer komplett dargestellt ist und in denen die Verstärkungsrippen 5b sternförmig von den Rahmenteilen 4a ausgehend in Richtung zum Mittelbereich verlaufen. Hier enden die Verstärkungsrippen 5b an einem Verbindungselement 6, das als zylindrischer Hohlkörper und in der erforderlichen Höhe ausgeführt ist, die hier der Höhe des Endteils 4b entspricht. Das Verbindungselement 6 besitzt ein verbreitertes Fußteil 6a, das gemeinsam mit kurzen Ausnehmungen 5c an den Verstärkungsrippen 5b eine Aufnahmestelle für ein noch zu beschreibendes Profilelement 17a bildet.

Die Zeichnung zeigt das zweite Bestandteil des Bauteils 1, das als Blechteil ausgeführte Verstärkungsteil 12, das hier aus einer ebenen Blechplatte 13, die an einer ihren Längsseiten ein rechtwinkelig umgebogenes Randteil 14 aufweist, besteht. Bei diesem Ausführungsbeispiel ist von der Dimensionierung her das Verstärkungsteil 12 so ausgeführt, dass seine Breite der Breite des Oberteils 2 entspricht, seine Länge wird an die Länge des Oberteils 2 entsprechend angepasst. Das Verstärkungsteil 12 ist dafür vorgesehen, über die Verbindungselemente 6 mit dem Oberteil 2 verbunden zu werden, und besitzt daher in entsprechenden Abständen Durchbrechungen 16. Der Durchmesser der Durchbrechungen 16 ist größer als der Außendurchmesser der Verbindungselemente 6. Der derart verbleibende Zwischenraum wird von dem bereits erwähnten elastischen Profilelement 17a ausgefüllt. Auch die mit dem Oberteil 2 und gegebenenfalls auch dem weiteren, noch zu beschreibenden Unterteil 22 in Kontakt tretenden Randkanten des Verstärkungsteils 12 sind in elastische Profilelemente in Form von Leisten 17b eingebettet, die im wesentlichen die Kanten umschließen.

Das beidseitige Aufbringen des elastischen Materials für die Profilelemente 17a, 17b erfolgt bevorzugt durch Spritzgießen, so dass durch den erforderlichen Materialtransport während dieses Verfahrens Verbindungsstege, sowohl an der Unter- als auch an der Oberseite des Verstärkungsteils 12 ausgebildet werden, die jedoch keine weitere Funktion besitzen. Zur Aufnahme der Verbindungsstege sind übrigens in den Verstärkungsrippen 5a Vertiefungen 5d vorgesehen. Die Profilelemente 17a, 17b und somit auch die Verbindungsstege werden aus einem in einem Spritzgießverfahren verarbeitbaren, nach der Aushärtung elastischen Material, beispielsweise Polyurethan hergestellt. Geeignet sind auch andere spritzbare und elastische Kunststoffe sowie auch spritzbare Gummimischungen.

Das dritte Teil, aus dem der Verbundkörper 1 besteht, ist das aus Kunststoff bestehende Unterteil 22, welches bei diesem Ausführungsbeispiel eine offene Konstruktion besitzt. Das Unterteil 22 kann nun als gesondertes Spritzgussteil gefertigt werden oder es kann auch durch Anspritzen der beiden bereits zusammengefügten Teile 2 und 12 hergestellt werden.

Beim dargestellten Ausführungsbeispiel ist das Unterteil 22 ein gesondertes Spritzgussteil, das aus Rahmenteilen 22a, 22b besteht und das ansonsten nahezu übereinstimmend zum Basisteil 2 ausgestattet ist. Das Unterteil 22 wird daher mit Verstärkungsrippen 25b, die den Verstärkungsrippen 5b des Oberteils 2 entsprechen, und mit zwischen benachbarten Verstärkungsrippen 25a strahlenartig verlaufenden Verstärkungsrippen 25b versehen. Diese enden in einem zylindrischen Verbindungsteil 26, dessen Innendurchmesser dem Außendurchmesser des Verbindungselements 6 des Oberteils 2 entspricht. Auch hier ist das Verbindungsteil 26 gemeinsam mit kurzen Ausnehmungen 25c so gestaltet, dass Raum zur Aufnahme des Profilelements 17a gegeben ist.

Zum Zusammenfügen der drei Teile 2, 12 und 22 zum Bauteil 1 wird das Verstärkungsteil 12 mittels seiner Durchbrechungen 16 und anschließend das Unterteil 22 mit seinen Verbindungsteilen 26 auf die Verbindungselemente 6 des Oberteils 2 aufgesetzt.

Die die Randkanten des Verstärkungsteils 12 umschließenden Profilleisten 17b stützen dabei die als Kunststoffteile ausgebildeten Teile, nämlich das Oberteil 2 und das Unterteil 22, gegenüber dem in der Mitte angeordneten, als Blechteil ausgebildeten Verstärkungsteil 12 elastisch ab.

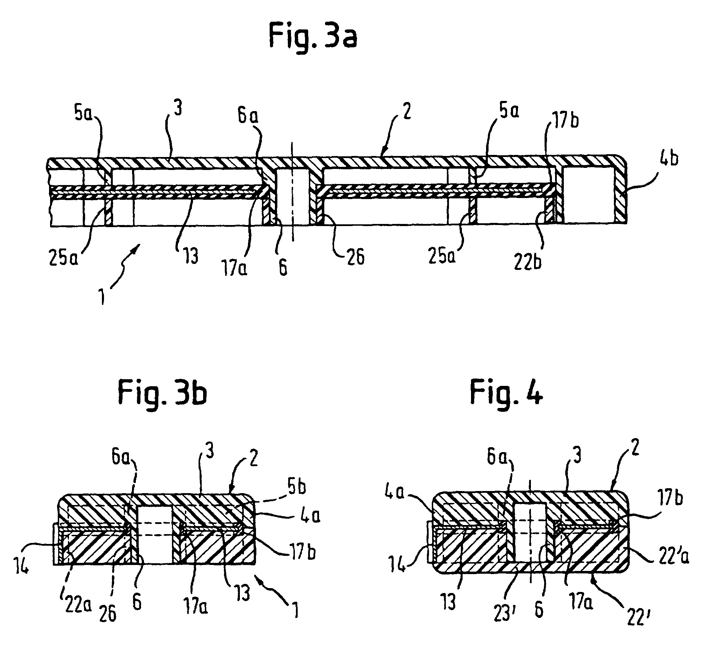

Die Schnittdarstellungen in Fig. 3a und 3b zeigen das zusammengesetzte Bauteil 1 und insbesondere die Anordnung bzw. Unterbringung der Profilelemente 17a, 17b.

Die feste Verbindung des Unterteils 22 zum Oberteil 2 kann durch hier nicht dargestellte Schnappverbindungen, durch Kleben, Verschweißen oder dergleichen erfolgen. Die Verbindung kann, wie bereits erwähnt, auch durch ein Anspritzen des Unterteils 22 erfolgen.

Wesentlich bei der gegenständlichen Erfindung ist nun, dass ein für viele Einsatzzwecke geeignetes zusammengesetztes Bauteil zur Verfügung gestellt wird, dessen Einzelteile aus unterschiedlichen Materialien bestehen können, was mit Vorteilen für das Gesamtgewicht des zusammengesetzten Bauteils verbunden ist und auch die erwünschte Festigkeit und Dauerhaltbarkeit gewährleistet, wobei die unterschiedliche Wärmeausdehnung der verwendeten Materialien kompensiert werden kann. Durch das Vorsehen der elastischen Profilelemente wird nämlich ausreichend Raum für die unterschiedliche Wärmeausdehnung der Materialien zur Verfügung gestellt. Gleichzeitig können auch Fertigungstoleranzen der Einzelteile ausgeglichen werden. Darüber hinaus können die Profilelemente auch eine Abdichtfunktion erfüllen. Bei erfindungsgemäßen zusammengesetzten Bauteilen ist ferner die Möglichkeit vorhanden, das Oberteil 2 mit einer glatten Oberfläche auszubilden, wobei sichergestellt werden kann, dass die Wandstärke in diesem Bereich konstant ist.

Als Material für das Oberteil 2 und das Unterteil 22 kommen grundsätzlich alle bekannten thermoplastischen Kunststoffe und Kunststoffmischungen, gegebenenfalls faserverstärkt, in Frage. Diese Materialien haben üblicherweise eine größere VVärmeausdehnung als Stahlblech.

Bei einer zweiten möglichen Ausführungsform wird auch das Unterteil 22' geschlossen ausgeführt und mit einer glatten Oberfläche versehen. Fig. 2d zeigt lediglich eine äußere perspektivische Ansicht des Unterteils 22' analog zur Darstellung des Unterteils 22 in Fig. 2c. Gegenüber dem Unterteil 22 ist das Unterteil 22' mit einer die Rahmenteile 22'a, 22'b abdeckenden Platte 23' ausgeführt, die gleichzeitig über das Rahmenteil 22'b etwas verlängert ist, um bei zusammengesetztem Bauteil auch das Endteil 4b des Oberteils 2 zu überdecken. Die beiden weiteren Teile des Bauteils, das Oberteil 2 und das Verstärkungsteil 12, können wie in den Zeichnungsfiguren 2a und 2b dargestellt und wie oben beschrieben ausgeführt sein. Auch die sonstige Ausgestaltung des Unterteils 22' entspricht jener des Unterteils 22. Die Schnittdarstellung in Fig. 4 zeigt einen Querschnitt durch ein zusammengesetztes Bauteil im Bereich eines Verbindungselements 6 mit dem geschlossen ausgeführten Unterteil 22'. Die übereinstimmend ausgestatteten Teile sind dabei mit den gleichen Bezugsziffem versehen.

Um ein unbeabsichtigtes Wegbiegen des Verstärkungsteils 12 unter Belastung in jedem Fall zu verhindern, können weitere Maßnahmen getroffen werden. Die Zeichnungsfiguren 5a, 5b zeigen gemeinsam mit Fig. 6a und 6b eine mögliche Ausführungsform von zwischen dem Verstärkungsteil 12 und dem Unterteil 22 wirkenden Verrastungsstellen. Diese Verrastungsstellen werden insbesondere in regelmäßigen Abständen vorgesehen, wobei in den Zeichnungsfiguren 5a und 5b nur eine einzige dargestellt ist. Den Fig. 6a und 6b können die diesbezüglichen Ausgestaltungen genauer entnommen werden.

Wie aus Fig. 5b in Verbindung mit Fig. 6b ersichtlich ist, ist am Rahmenteil 22a des Unterteils 22 im Bereich der einen, vom Verbindungsteil 26 rechtwinkelig zum Rahmenteil 22a verlaufenden Verstärkungsrippe 25b das Rahmenteil 22a nach einwärts geformt, so dass dort ein nach innen versetztes Stirnteil 27 gebildet wird, das von einem am Rand des Unterteils 22 ausgebildeten Stützteil 28 beabstandet ist und mit diesem über einen Verbindungsfuß 29 verbunden ist. Derart wird eine Aufnahmestelle für im wesentlichen gegengleich ausgebildete Teile am Verstärkungsteil 12 geschaffen.

Die aus zwei Teilen bestehende Fig. 6a, wo die zugehörige Ausgestaltung am Verstärfcungsteil 12 von unten und innen her gezeigt ist, verdeutlicht im rechten Teil dieser Zeichnungsfigur die Ausgestaltung im Bereich des Randteils 14 des Verstärkungsteils 12. Durch Prägen und Stanzen werden dabei an den entsprechenden Stellen des Randteils 14 Verankerungsteile 19 geschaffen. Dabei ist im rechten Teil der Fig. 6a die Ausgestaltung des Randteils 14 gezeigt, das noch zu beschreibende Profilelement 17c ist lediglich strichliert dargestellt. Wie aus dem linken Teil der Fig. 6a ersichtlich ist, ist das Verankerungsteil 19 in das Material des Profilelements 17c eingebettet. Die Ausgestaltung des Profilelements 17c erfolgt nun derart, dass dieses mit einer Vertiefung 30 versehen ist, mit welcher das Profilelement 17c den Verbindungsfuß 29 übergreift und auf diesem sitzt. Es ist eine Selbstverständlichkeit, dass die Ausgestaltung des Profilelements 17c, die bevorzugt durch Anspritzen erfolgt, derart getroffen ist, dass an den Verrastungsstellen ein optimales Zusammenpassen gegeben ist. Die im linken Teil der Fig. 6a noch dargestellten Verbindungsstege 18c aus dem elastischen Material des Profilelements 17c entstehen während der Fertigung durch das Spritzgießverfahren.

Durch das Vorsehen solcher Verrastungsstellen ist nun nicht nur wirkungsvoll ein unbeabsichtigtes Wegbiegen des Verstärkungsteils 12 verhindert, sondern es ist auch hier darauf geachtet, dass durch das Vorsehen eines elastischen Profilelements unterschiedliche Wärmeausdehnungen ausgeglichen werden können. Dabei ist vor allem die rückfedernde Wirkung der Verrastungsstellen bei
Lasteinbringung - äußere Belastungen oder thermische Belastungen - von Bedeutung.

Erfindungsgemäß ausgeführte zusammengesetzte Bauteile müssen nicht drei Einzelteile umfassen, es können auch nur zwei der dargestellten und beschriebenen Teile, von welchen jedoch eines das Verstärkungsteil 12 ist, vorgesehen werden. Dabei kann das Verstärkungsteil 12 so gestaltet werden, dass sein abgebogener Randteil an einem Rahmenteil des Oberteils 2 anliegt. Die oben beschriebenen Verrastungsstellen können somit analog an diesen beiden Teilen vorgesehen werden.

Ein erfindungsgemäß zusammengesetzter Bauteil kann beispielsweise über eine Schnappverbindung an anderen Bauteilen angebracht werden bzw. mit diesen verbunden werden.

Die elastischen Profilelemente können ferner auch als gesonderte Teile gefertigt werden und an den Einzelteilen des Verbundkörpers an den vorgesehenen Stellen positioniert werden. Dabei kann ferner das die elastischen Profilelemente bildende Material bei zusammengesetztem Ober- und Unterteil in die entsprechend vorzusehenen Hohlräume eingespritzt werden. Wie bereits erwähnt, kommen als Material für die Profilelemente vor allem Polyurethan oder Gummi in Frage, es können aber auch andere Schaumstoffe oder elastische Kunststoffe verwendet werden.

## Patentansprüche

1. Zusammengesetztes Bauteil (1) mit einem schalenartigen Oberteil (2) und einem Verstärkungsteil (12), die über diskrete Verbindungsstellen miteinander Verbunden sind, wobei diese beiden Teile (2; 12) aus Materialien mit unterschiedlichem thermischen Ausdehnungsverhalten bestehen,
**dadurch gekennzeichnet,**
**daß** im Bereich der Verbindungsstellen zwischen den beiden Teilen (2; 12) Profilelemente (17a) aus elastischem Material wirksam sind,
**daß** die diskreten Verbindungsstellen von diskreten Verbindungselementen (6), die an dem Oberteil (2) ausgebildet sind, und von auf diese aufsetzbaren Durchbrechungen (16) oder dergleichen, die am Verstärkungsteil (12) vorgesehen sind, gebildet sind, und
**daß** es ein Unterteil (22) umfaßt, das ein gesondertes Bauteil ist, welches mit dem Oberteil (2) und dem Verstärkungsteil (12) über die diskreten Verbindungselemente (6) des Oberteils (2) verbunden ist, wobei das Verstärkungsteil (12, 13) zwischen dem Oberteil (2) und dem Unterteil (22) angeordnet ist.

2. Zusammengesetztes Bauteil nach Anspruch 1, **dadurch gekennzeichnet, daß** das Unterteil (22) ein in einem Spritzgußverfahren hergestelltes Kunststoffteil ist.

3. Zusammengesetztes Bauteil nach Anspruch 1 oder 2, **dadurch gekennzeichnet, daß** Kanten- bzw. Randbereiche (14) des Verstärkungsteils (12), die mit dem Oberteil (2) in Kontakt sind, mit weiteren elastischen Profilelementen (17b) versehen, insbesondere von diesen umschlossen, sind.

4. Zusammengesetztes Bauteil nach einem der vorhergehenden Ansprüche, **dadurch gekennzeichnet, daß** die elastischen Profilelemente (17a, 17b) an dem Verstärkungsteil (12) angespritzt sind.

5. Zusammengesetztes Bauteil nach einem der vorhergehenden Ansprüche, **dadurch gekennzeichnet, daß** das mit den diskreten Verbindungselementen (6) versehene Oberteil (2) ein in einem Spritzgußverfahren hergestellten Kunststoffteil ist, das insbesondere mit Verstärkungsrippen (5a, 5b) versehen ist.

6. Zusammengesetztes Bauteil nach einem der vorhergehenden Ansprüche, **dadurch gekennzeichnet, daß** das die Durchbrechungen (16) aufweisende Verstärkungsteil (12) ein aus Stahlblech bestehendes Verstärkungsteil ist, welches mit den elastischen Profilelementen (17a, 17b) versehen ist.

7. Zusammengesetztes Bauteil nach einem der vorhergehenden Ansprüche, **dadurch gekennzeichnet, daß** das Oberteil (2) und/oder das Unterteil (22) schalenartig ausgeführt ist und eine glatte Außenfläche besitzt.

8. Zusammengesetztes Bauteil nach einem der vorhergehenden Ansprüche, **dadurch gekennzeichnet, daß** das Verstärkungsteil (12) einen umgebogenen Rand (14) aufweist, welcher mit einem Rand oder dergleichen des Oberteils (2) oder des Unterteils (22) von außen überlappt und über gesonderte Verrastungsstellen an den überlappenden Rändern gegen ein Wegbiegen gesichert ist.

9. Zusammengesetztes Bauteil nach Anspruch 8, **dadurch gekennzeichnet, daß** an den Verrastungsstellen ebenfalls elastische Profilelemente (17c) eingefügt sind.

10. Verwendung eines zusammengesetzten Bauteils nach einem der Ansprüche 1 bis 9 als Bauteil oder Bauteilkomponente eines Kraftfahrzeuges.

## Claims

1. Composite structural member (1) with a shell-like upper part (2) and a reinforcing part (12), which are connected to each other by means of discrete connecting points, these two parts (2; 12) consisting of materials with different thermal expansion behaviour, **characterized in that** profiled elements (17a) of elastic material are effective in the region of the connecting points between the two parts (2; 12), **in that** the discrete connecting points are formed by discrete connecting elements (6), which are formed on the upper part (2), and by apertures (16) or the like, which can be placed onto the said connecting elements and are provided on the reinforcing part (12), and **in that** it comprises a lower part (22), which is a separate structural member which is connected to the upper part (2) and the reinforcing part (12) by means of the discrete connecting elements (6) of the upper part (2), the reinforcing part (12, 13) being arranged between the upper part (2) and the lower part (22).

2. Composite structural member according to Claim 1, **characterized in that** the lower part (22) is a plastic part produced in an injection-moulding process.

3. Composite structural member according to Claim 1 or 2, **characterized in that** edge or border regions (14) of the reinforcing part (12) which are in contact with the upper part (2) are provided with further elastic profiled elements (17b), in particular are enclosed by these.

4. Composite structural member according to one of the preceding claims, **characterized in that** the elastic profiled elements (17a, 17b) are moulded onto the reinforcing part (12).

5. Composite structural member according to one of the preceding claims, **characterized in that** the upper part (2) provided with the discrete connecting elements (6) is a plastic part which is produced in an injection-moulding process and is provided in particular with reinforcing ribs (5a, 5b).

6. Composite structural member according to one of the preceding claims, **characterized in that** the reinforcing part (12) having the apertures (16) is a reinforcing part which consists of steel sheet and is provided with the elastic profiled elements (17a, 17b).

7. Composite structural member according to one of the preceding claims, **characterized in that** the upper part (2) and/or the lower part (22) is configured in the manner of a shell and has a smooth outer surface.

8. Composite structural member according to one of the preceding claims, **characterized in that** the reinforcing part (12) has a bent-around border (14), which overlaps with a border or the like of the upper part (2) or of the lower part (22) from the outside and is secured against bending away by means of separate latching points on the overlapping borders.

9. Composite structural member according to Claim 8, **characterized in that** elastic profiled elements (17c) are likewise inserted at the latching points.

10. Use of a composite structural member according to one of Claims 1 to 9 as a structural member or component of a structural member of a motor vehicle.

## Revendications

1. Elément de construction composé (1) avec une partie supérieure (2) en forme de coque et une partie de renforcement (12) qui sont reliées par des emplacements de liaison discrets, où ces deux parties (2;12) sont constituées de matériaux ayant une tenue différente en dilatation thermique ,
**caractérisé**
**en ce qu'**agissent dans la zone des emplacements de liaison entre les deux parties (2;12) des éléments profilés (17a) en matériau élastique,
**en ce que** les emplacements de liaison discrets sont formés par des éléments de liaison discrets (6) qui sont réalisés à la partie supérieure (2) et sont formés par des perçages (16) ou analogues pouvant être placés sur ceux-ci qui sont prévus à la partie de renforcement (12), et
**en ce qu'**il comprend une partie inférieure (22), qui est un composant séparé, qui est reliée à la partie supérieure (2) et à la partie de renforcement (12) par les éléments de liaison discrets (6) de la partie supérieure (2), où la partie de renforcement (12) est disposée entre la partie supérieure (2) et la partie inférieure (22).

2. Elément de construction composé selon la revendication 1, **caractérisé en ce que** la partie inférieure (22) est une partie en matériau synthétique fabriquée selon un procédé de moulage par injection.

3. Elément de construction composé selon la revendication 1 ou 2, **caractérisé en ce que** des zones d'arête respectivement de bord (14) de la partie de renforcement (12), qui sont en contact avec la partie supérieure (2), sont pourvues d'autres éléments profilés élastiques (17b), en particulier sont entourées par ceux-ci.

4. Elément de construction composé selon l'une des revendications précédentes, **caractérisé en ce que** les éléments profilés élastiques (17a, 17b) sont rapportés par moulage à la partie de renforcement (12).

5. Elément de construction composé selon l'une des revendications précédentes, **caractérisé en ce que** la partie supérieure (2) pourvue des éléments de liaison discrets (6) est une partie en matériau synthétique fabriquée selon un procédé de moulage par injection, qui est munie, en particulier, de nervures de renforcement (5a, 5b).

6. Elément de construction composé selon l'une des revendications précédentes, **caractérisé en ce que** la partie de renforcement (12) présentant les perçages (16) est une partie de renforcement en tôle d'acier qui est munie des éléments profilés élastiques (17a, 17b).

7. Elément de construction composé selon l'une des revendications précédentes, **caractérisé en ce que** la partie supérieure (2) et/ou la partie inférieure (22) est réalisée en forme de coque et possède une surface extérieure lisse.

8. Elément de construction composé selon l'une des revendications précédentes, **caractérisé en ce que** la partie de renforcement (12) présente un bord recourbé (14) qui est recouvert par un bord ou analogue de la partie supérieure (2) ou de la partie inférieure (22) de l'extérieur et qui est assurée par des emplacements d'enclenchement séparés aux bords de recouvrement à l'encontre d'une courbure au loin.

9. Elément de construction composé selon la revendication 8, **caractérisé en ce que** des éléments profilés élastiques (17c) sont insérés également aux emplacements d'enclenchement.

10. Utilisation d'un élément de construction composé selon l'une des revendications 1 à 9 comme élément de construction ou comme composant d'élément de construction d'un véhicule automobile.
